# EUROPEAN PATENT SPECIFICATION

(11) **EP 0 307 199 B1**
(45) Date of publication and mention of the grant of the patent: **12.04.1995**
(21) Application number: 88308306.5
(22) Date of filing: 08.09.1988
(51) Int. Cl.: B29C 61/06

(54) **Heat recoverable article**
Wärmerückstellbarer Artikel
Article thermorétractable

(30) Priority: 09.09.1987 GB 8721181; 09.10.1987 GB 8723762; 09.10.1987 GB 8723761
(43) Date of publication of application: 15.03.1989
(73) Proprietor: Raychem A/S, 2600 Glostrup (DK)
(72) Inventor: Jenson, Per, DK-3550 Slangerup (DK); Berth, Joergen Mikael, DK-3490 Kvistgaard (DK)
(74) Representative: Auckland, Jacqueline

(56) References cited:
- EP-A- 0 173 541
- FR-A- 2 370 225
- GB-A- 2 076 106

## Description

This invention relates to an electrically heat recoverable article which increases its wall thickness on recovery. One application of the invention is sealing a space between an elongate object and a surface surrounding the elongate object. Another application is an internal seal or coupler for hollow conduits such as pipes.

A common example where sealing is needed between an elongate object and a surface surrounding the or each object is for ducts and supply lines, where some form of seal therefore has to be provided either around the substrate (for example in the case of a supply line) or between two substrates (for example in the case of a duct seal between the duct and a supply line it carries). Other similar applications also exist for sealing between elongate objects such as pipes and cables and substrates surrounding or carried within the elongate objects. The substrates and elongate objects may have irregular surfaces.

Various techniques have been used in the past for forming such seals. The simplest perhaps is a tape wrap which has the advantage that a single product could be used over virtually any size or shape of substrate, but the disadvantage of poor performance. Sealing materials such as adhesives or mastics may be used alone or with tapes, but again performance is poor.

In recent years dimensionally-recoverable articles have been used for sealing supply lines and as duct seals. In general, a dimensionally-recoverable article is an article the dimensional configuration of which may be made substantially to change when subjected to a suitable treatment, for example heating. Usually these articles recover towards an original shape from which they have previously been deformed but the term also includes an article which adopts a new configuration even if it has not previously been deformed.

In their most common form such articles comprise a heat-shrinkable sleeve made from a polymeric material exhibiting the property of elastic or plastic memory as described, for example, in U.S. Patents 2027962, 3086242 and 3597372. In the production of heat-recoverable articles, the polymeric material may be cross-linked at any stage in the production of the article that will enhance the desired dimensional recoverability.

An advantage of these articles is that they are strong, impermeable, water resistant and well able to resist such agencies as the small mechanical stresses caused by temperature variation, earth movements and repair work. They can be easily installed in their recoverable configuration and then caused to shrink (or otherwise recover) into sealing engagement with the substrate that they are to protect. In this way, ease of installation can be combined with excellent performance. A single size of product may be used with a variety of sizes of substrate, and close tolerances in manufacture may be avoided.

A difficulty, however, remains in some circumstances. The very fact that these articles recover on heating means that in general heat must be applied when the article is in approximately the desired position with respect to the substrate. This may be a problem where the substrate or some article nearby physically prevents or hinders proper positioning of a torch or other heating means, or where it may be damaged by excessive heat.

European Patent Application Publication No. 0179657 (B108) describes an article which can be heated away from the desired installation position, and then brought into contact with the surrounding surface by activation of a resilient biasing member.

It is also known for recoverable articles to comprise conductive polymeric materials which can be heated to effect recovery by passing electrical current therethrough. As an example GB 1265194 describes a conductive polymeric, shrinkable tubular layer, which is optionally used in conjunction with a non-conductive shrinkable tubular layer. Current is supplied to the conductive layer by alligator clips. The passage of the current heats and hence recoves the article.

It is also known to be desirable to use for a conductive recoverable article, a material which exhibits a PTC (positive temperature coefficient of resistivity) effect, that is a sharp rise in resistivity at a particular, or over a short range of temperatures. This temperature or temperature range is known as the anomaly or switching temperature. Typically the material is selected to exhibit the sharp rise in temperature at or slightly above the recovery temperature of the article. The PTC effect minimises overheating and consequent so-called "thermal runaway" of the material. Materials which exhibit a PTC effect are typically referred to simply as PTC materials.

We have discovered a new article and method which can be used to seal a space between an elongate object and a surrounding surface, which uses an electrically recoverable, conductive polymeric material. The object can be positioned in the desired installation position, with electrical wires leading away from the installation position for connection and recovery of the article.

Thus a first aspect of the invention provides a tubular heat recoverable article, which has been deformed to make it recoverable, comprising (a) an electrically conductive polymeric material and (b) electrical connection means, the deformation of the article and the position of the electrical connection means being such that, when the electrical connection means are electrically connected to an appropriate source of electrical power, the electrical current flows through the conductive polymeric material in at least one region of the article, heating and recovering at least the said region of the article whereby on recovery at least a section of the said region of the article increases in wall thickness, and characterised in that a region of the article, at least in its recovered state, is convoluted.

The electrical connection means may be actual electrodes, or may be part of the article to which electrodes can conveniently be attached.

One application of the article is to seal a space between an elongate object and a surface surrounding the object. In this case the increase in wall thickness of the article is preferably arranged to seal the space between the elongate object and surrounding surface.

Tubular articles according to the invention are deformed so that on recovery they increase in wall thickness. This may be done in any suitable way. As an example, the articles may be stretched longitudinally.

A method of forming a seal between at least one elongate object and a surface surrounding the or each object, which comprises: (a) positioning between the object and the surface a tubular or wraparound article which has been deformed to render it heat recoverable, and which comprises electrical connection means, and (b) connecting the electrical connection means to a source of electrical power to cause electrical current to flow between the connection means to heat and hence to recover at least part of the article; the position of the electrical connection means, and the deformation of the article being such that recovery causes at least one region of the article to increase its wall thickness and to adopt a convoluted configuration, at least in the recovered state, to seal the space between the elongate object and the surrounding surface.

In some articles according to the invention at least one transverse dimension of the article increases on recovery. For example, the diameter may increase for articles which are substantially circular in cross-section. Such articles may be used for internally repairing, reinforcing or coupling hollow elongate objects such as pipes.

The tubular articles according to the invention may be integrally formed closed in cross-section. As an alternative a wraparound article may be used. As used herein the term "wraparound" means a cover which can be wrapped around a substrate, and longitudinal edges secured together to form a tubular article around the substrate. Wraparound covers may be closed in any suitable way. For example upstanding flanges which can be held together by clamps or by a channel shaped closure may be provided at or near the longitudinal edges. Longitudinal electrodes may be included in or on the upstanding flanges, or at the base thereof, and/or extending along part of the main body of the cover. A wraparound cover can conveniently be made by extrusion. The electrodes can be embedded in the cover during the extrusion process.

Tubular articles according to the invention may be open at one or both ends.

Articles according to the invention may be coated on their internal and/or external surfaces with adhesive or sealant.

In some embodiments according to the invention, at least a section of the article is convoluted, at least after recovery. Preferably the section is convoluted before recovery, and the convolutions increase their depth (height) after recovery. Where the article is convoluted the wall thickness of the convoluted section is defined as the distance between the extremes of the convolutions, i.e. it is the depth of the convolutions. One or a plurality of convolutions may be used. A typical number is 2 to 7.

Smooth walled articles may also be used which increase their thickness on recovery.

The outer surface of at least the section of the article which increases its thickness, is preferably coated with adhesive or sealant, to enhance the seal to the said surrounding surface.

The section which increases its thickness on recovery may be electroded in any suitable way to cause electrical current to flow through the article. Conveniently the section is electroded so that current flows in or parallel to the plane of the article, for example by annular electrodes embedded in, or positioned on the surface of either end of the section whose thickness increases, or by longitudinal electrodes extending along the length of that section. Annular electrodes will cause current to flow along the length of the article. Longitudinal electrodes will cause current to flow around the circumference of the article.

In some embodiments, the article comprises one or more radially shrinkable sections for recovery into contact with an elongate object within the article. In these cases, the article is preferably coated on its inner surface with adhesive or sealant. The radially shrinkable section may be electroded in any convenient way. One embodiment uses elongate electrodes extending along the length of the article to be radially shrinkable.

Where the radially shrinkable sections are tubular with one or more open ends, it may be desirable to seal between two or more substrates exiting the open end. This can be achieved using a branch-off clip (e.g. as disclosed in US 4648924) which brings together circumferentially spaced portions of the walls of the article between the substrates. Preferably an electrically heated branch off clip is used. As an alternative an electrically heated filling piece may be used. The electrically heated clip and filling piece may be powered by the same power supply that is used to heat and recover the article.

One embodiment of article according to the invention comprises a convoluted first section to which annular electrodes can be connected. This section recovers such that there is an increase in the depth of the convolutions, thereby sealing the article into contact with a surrounding surface. This article preferably has one, preferably two end sections which are radially shrinkable, each of which comprise a pair of elongate electrodes extending along the length of those end sections. Such an article can be used as a wall feedthrough, the first section or sections sealing into contact with the duct in the wall, and the end section sealing to cables passing through the feedthrough.

A preferred composition for the article is one having the electrical characteristics specified in European Publication No. EP-A-0307207 (DK005 EPC). Articles according to that invention have been expanded from X% or Y% to make them heat recoverable, and comprise a conductive polymeric material, the resistivity of which decreases on expansion, as measured in the direction of current flow in at least part of the X - Y expansion range. Other articles according to the invention are heat recoverable, comprise a conductive polymeric material which has a resistivity which increases on recovery as measured in the direction of current flow, throughout the temperature range 20°C to Tₑ (extrpolated end temperature as measured according to ASTM D3418-82). Other articles according to that invention have a so called pseudo - PTC ratio (peak resistivity: resistivity at 25°C) in the range 1½ - 10, and are connected to electrodes so that current flows parallel to the faces of the article.

Particular examples of materials that can be used are described in European Publication No. EP-A-0307205 (RK365 EPC). One example of a suitable material is 59.4 parts by weight Elvax 460 (an EVA of 18% vinylacetate content and a melt flow index of 2.5, as supplied by Du Pont), 39.6 parts by weight of Vulcan P (a carbon black supplied by Cabot Corporation) and 1 part by weight antioxidant. Other examples are:

| Polymer (parts by weight) | Carbon black (parts by weight) | Antioxidant (parts by weight) |
|---|---|---|
| Marlex* HXM 50100 (59.4) | Vulcan* P (39.6) | (1.0) |
| Elvax* 460 (59.4) | Sevalco* N110 (39.6) | (1.0) |
| Sclair* 11D-1 (59.4) | Ensaco* MS (39.6) | (1.0) |
| Elvax* 770 (59.4) | Vulcan* P (39.6) | (1.0) |

| | | |
|---|---|---|
| * Represents a trademark | | |

The polymeric materials used are as follows:
Marlex is a HDPE supplied by Phillips.
Elvax 460 described earlier.
Sclair 11D-1 is a LLDPE supplied by Du Pont, Canada
Elvax 770 is an EVA supplied by Du Pont.
Vulcan P, Ensaco MS and Sevalco N110 are supplied by Cabot Corporation, Ensagri Willebroek NV and Sevalco Ltd, respectively.

The materials having the above mentioned preferred pseudo PTC ratios and a resistivity which varies with recovery and expansion as specified are particularly useful in applications where there is uneven recovery and/or high recovery (e.g. greater than 150% = 2.5X). Thus these materials are particularly preferred for sealing against elongate objects, such as pipes or cables, which have an irregular inner or outer surface.

Where the electrodes extend along the length of the article they are preferably embedded in, or lie on the surface of heat stable flanges extending along at least part of the length of the article. Such flanges and their advantages are described in European Publication No. EP-A-0307206 (DK003 EP).

The electrodes (where longitudinal) may extend along the whole or part or only part of the length of the article. Where they extend only part way along the length compensatory features are preferably provided to compensate for increase current density at the electrode ends as specified in European Publication No. EP-A-0207200 (DK004 EPC).

The whole part may be heated and shrunk simultaneously. Alternatively, by providing interrupted electrodes a sequence of different parts can be heated independently. This is described in European Publication No. EP-A-0307198 (RK353 EPC).

In articles according to the invention the wall thickness of the article may be varied along its length. Also two or more layers of different materials may be used. The second or additional layer may extend along the whole or along any part of the length of the article. They may have electrical properties e.g. room temperature resistivity and resistivity/temperature behaviour, that is the same as, or different to, that of the first material. For example the second or subsequent layers may comprise a material that exhibits traditional PTC behaviour or ZTC (zero temperature coefficient of resistivity) behaviour. The effect of the additional layer(s) is that it (they) provide additional material through which electrical current can flow, and hence provide additional heating. By appropriate choice of the resistivity of the material of the additional layer(s) greater heating can be achieved than would be the case were a similar additional thickness of the first material used. This may be advantageous, for example to decrease recovery time in certain regions, or where a higher temperature is required. Therefore in some preferred embodiments second or subsequent layers of material different to the first material are added in selected regions.

Similarly the thermal load of various sections of the article can be varied, for example by adjusting the thickness of the adhesive or sealant on the sections of the article. The sections with the thickest adhesive will take the longest to heat, and hence the amount of heating of the sections is varied.

Another example of using two layers of different material is where certain properties, eg flame retardancy, solvent resistance, abrasion resistance, electrical insulation, impact resistance, colour coding are required.

Where two or more layers are used these may be applied separately , for example by sequential extrusion or may be co-extruded.

Embodiments of the invention will now be described by way of example, wherein:
Figure 1 is a sectional view showing an article according to the invention for sealing between a cable and a hole in a wall, prior to recovery.
Figure 2 is a sectional view showing the article of Figure 1 recovered into sealing engagement with the wall; and
Figure 3 is a sectional view showing the article of Figure 2 recovered into engagement with the cable; and
Figures 4 and 5 show another article according to the invention, before and after recovery respectively, being used to internally repair a damaged pipe.

Referring now to the drawings an article 2 according to the invention is used to seal a space between a hole in a wall 4 and a cable 6.

The article comprises an electrically conductive polymeric material. It has a central convoluted section 8 and end plain sections 10 and 12. Convoluted section 8 has been previously deformed by stretching it longitudinally parallel to its main axis, so that on recovery the depth of its convolutions increases, and hence the wall thickness of section 8 increases. End sections 10 and 12 have been previously deformed so that they are radially shrinkable.

Annular braided electrodes 14 of opposite polarity surround the circumference of the article at either end of the convoluted section. Pairs of longitudinal electrodes in the form of silver paint strips 16 and 18, extend along opposite sides of end sections 10 and 12. The silver paint electrodes 16 and 18 are provided on heat stable, conductive polymeric flanges 17 and 19.

The outer surface of convoluted section 8 is coated with adhesive 20. The inner surface of ends 10 and 12 is coated with adhesive 22.

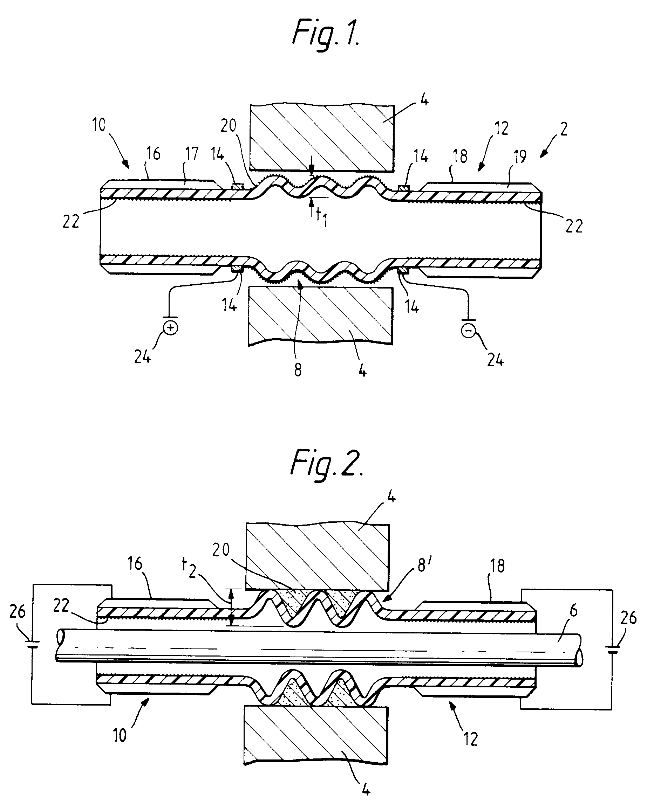

To seal the article to the wall 4, electrodes 14 are first connected to a source of electrical power 24. The connections may be made to power terminals on either side of wall (as shown in Figure 1), or the wires from one electrode may be trailed through the hole in the wall.

The electrical connection of electrodes 14 causes section 8 of the article to heat. This causes adhesive 20 to melt and flow, and the central section 8 to recover so that the convolutions increase in depth. After recovery the convolutions have increased in depth so that they are in sealing contact with the inner surface of the wall. The wall thickness is thus increased from t₁ to t₂ (see Figures 1 and 2). Sealing is enhanced by adhesive 20 (Figure 2).

Then connection of the article to cable 6 passing through the article is made. To do this, the electrodes 14 are first removed, to prevent short-circuiting. Then elongate electrodes 16 and 18 (at ends 10 and 12 of the article) are each connected to separate sources of electrical power 26. This may be done simultaneously or sequentially. The connection causes electrical current to flow around the circumference of each end of the article. This heats and shrinks the ends and also melts and flows the adhesive lining 22 at either end. The recovered ends seal into contact with cable 6.

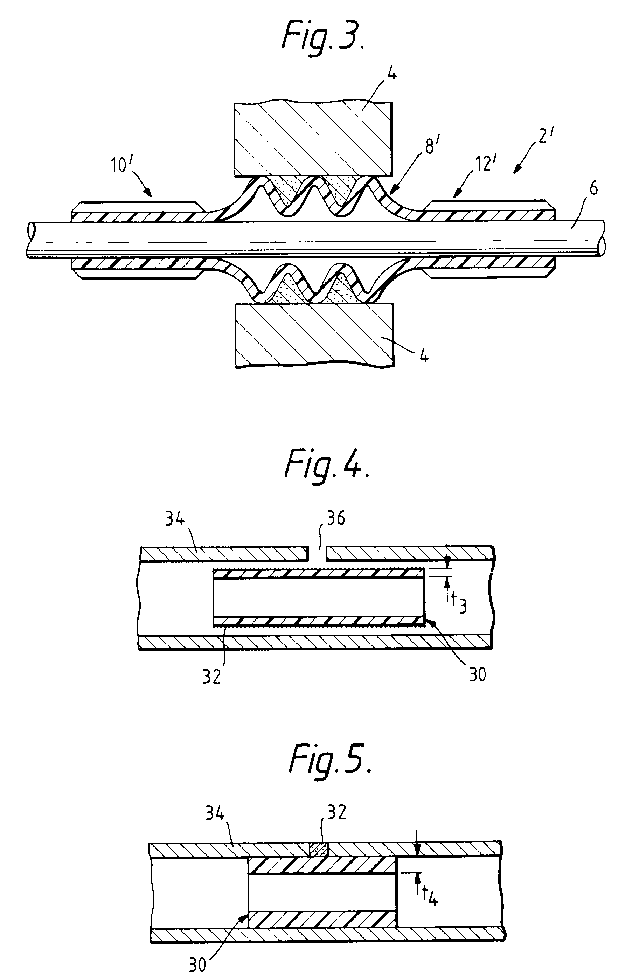

The installed recovered part is shown in Figure 3.

Recovered parts are indicated in all drawings by a superscript (').

Instead of the entire section 8 being recoverable, two shorter convoluted sections, at either end of the hole in wall 4 may be used.

Typically the end sections of the article of Figures 1 - 3 can be recovered onto cables of diameter about 1 cm from an initial diameter of say 3-4 cm. In this case the convolutes can increase the wall thickness of the article to fill a void of diameter 5cm.

Figure 4 shows another conductive polymeric recoverable article 30 according to the invention. Article 30 is smooth in profile and is coated on its outer surface with adhesive 32. It is used to seal a pipe 34 which is damaged at point 36.

Electrodes (not shown) on the article are connected to a source of electrical power. This heats and recovers the article and melts adhesive 32.

The recovered part is shown in figure 5. It has increased its wall thickness from t₃ to t₄, and adhesive 32 has flowed to fill damaged part 36 in the pipe 32.

## Claims

1. A tubular heat recoverable article (2), which has been deformed to make it recoverable, comprising (a) an electrically conductive polymeric material and (b) electrical connection means (14), the deformation of the article and the position of the electrical connection means being such that, when the electrical connection means are electrically connected to an appropriate source of electrical power (24), the electrical current flows through the conductive polymeric material in at least one region of the article, heating and recovering at least the said region of the article whereby on recovery at least a section of the said region of the article increases in wall thickness, and characterised in that a region of the article, at least in its recovered state, is convoluted.

2. An article according to claim 1, wherein at least one transverse dimension of the article increases on recovery.

3. An article according to claim 2, wherein the article is substantially circular in cross-section, and increases its diameter on recovery.

4. An article according to any preceding claim, wherein at least part of the article is convoluted in its pre-recovered state, and the depth of the convolutions increases on recovery, thereby providing the said increase in wall thickness of the article.

5. An article according to any preceding claim, wherein at least one surface of the article is coated with adhesive or sealant (20,22).

6. An article according to claim 4, wherein at least the convoluted region is coated on its outer surface with adhesive or sealant.

7. An article according to any preceding claim, wherein annular electrical connection means (14) are positioned at either end of the section which on recovery increases its wall thickness.

8. An article according to any preceding claim, at least part of which is radially shrinkable, and which comprises second electrical connection means (16, 18) which can be connected to a source of electrical power (26).

9. An article according to claim 8, wherein at least one end of the article shrinks on recovery and the remaining portion of the article increases its thickness on recovery.

10. An article according to any preceding claim, comprising a first convoluted section to which electrodes can be attached to cause the convolutions to increase their depth, and at least one heat shrinkable end section comprising longitudinal electrodes (16,18) extending along the length of the article, which can be connected to a source of electrical power to shrink said end(s).

11. An article according to claim 10, wherein the outer surface of the convoluted section, and the inner surface of the said end are coated with adhesive and/or sealant (20,22).

12. A method of forming a seal between at least one elongate object (6) and a surface surrounding the or each object, which comprises: (a) positioning between the object and the surface a tubular or wraparound article (2) which has been deformed to render it heat recoverable, and which comprises electrical connection means (14), and (b) connecting the electrical connection means to a source of electrical power (24) to cause electrical current to flow between the connection means to heat and hence to recover at least part of the article; the position of the electrical connection means, and the deformation of the article being such that recovery causes at least one region of the article to increase its wall thickness and to adopt a convoluted configuration, at least in the recovered state, to seal the space between the elongate object and the surrounding surface.

## Patentansprüche

1. Rohrförmiger wärmerückstellbarer Gegenstand (2), der verformt worden ist, um ihn rückstellbar zu machen, wobei der Gegenstand aufweist: (a) ein elektrisch leitfähiges polymeres Material und (b) elektrische Verbindungseinrichtungen (14), wobei die Verformung des Gegenstands und die Position der elektrischen Verbindungseinrichtungen derart sind, daß, wenn die elektrischen Verbindungseinrichtungen mit einer geeigneten elektrischen Stromquelle (24) elektrisch verbunden sind, der elektrische Strom durch das leitfähige polymere Material in mindestens einem Bereich des Gegenstands fließt und mindestens den genannten Bereich des Gegenstands erwärmt und rückstellt, so daß bei Rückstellung mindestens ein Abschnitt des genannten Bereichs des Gegenstands in bezug auf Wanddicke zunimmt, und dadurch gekennzeichnet, daß ein Bereich des Gegenstands, mindestens in seinem rückgestellten Zustand, gewellt ist.

2. Gegenstand nach Anspruch 1, wobei mindestens eine Querdimension des Gegenstands bei Rückstellung zunimmt.

3. Gegenstand nach Anspruch 2, wobei der Gegenstand von im wesentlichen kreisrundem Querschnitt ist und sein Durchmesser bei Rückstellung zunimmt.

4. Gegenstand nach einem der vorhergehenden Ansprüche, wobei mindestens ein Teil des Gegenstands in seinem Zustand vor der Rückstellung gewellt ist und die Tiefe der Wellen bei Rückstellung zunimmt, wodurch die genannte Zunahme der Wanddicke des Gegenstands erhalten wird.

5. Gegenstand nach einem der vorhergehenden Ansprüche, wobei mindestens eine Oberfläche des Gegenstands mit Klebstoff oder Dichtmittel (20, 22) beschichtet ist.

6. Gegenstand nach Anspruch 4, wobei mindestens der gewellte Bereich an seiner äußeren Oberfläche mit Klebstoff oder Dichtmittel beschichtet ist.

7. Gegenstand nach einem der vorhergehenden Ansprüche, wobei ringförmige elektrische Verbindungseinrichtungen (14) an jedem Ende des Abschnitts positioniert sind, dessen Wanddicke bei Rückstellung zunimmt.

8. Gegenstand nach einem der vorhergehenden Ansprüche, von dem mindestens ein Teil in Radialrichtung schrumpfbar ist und der zweite elektrische Verbindungseinrichtungen (16, 18) aufweist, die mit einer elektrischen Stromquelle (26) verbunden werden können.

9. Gegenstand nach Anspruch 8, wobei mindestens ein Ende des Gegenstands bei Rückstellung schrumpft und der restliche Bereich des Gegenstands bei Rückstellung in bezug auf seine Dicke zunimmt.

10. Gegenstand nach einem der vorhergehenden Ansprüche, der aufweist: einen ersten gewellten Abschnitt, an dem Elektroden angebracht werden können, um die Wellen dazu zu veranlassen, ihre Tiefe zu vergrößern, und mindestens einen wärmeschrumpfbaren Endabschnitt, der Längselektroden (16, 18) aufweist, die sich entlang der Länge des Gegenstands erstrecken und mit einer elektrischen Stromquelle verbunden werden können, um das Ende (die Enden) zu schrumpfen.

11. Gegenstand nach Anspruch 10, wobei die äußere Oberfläche des gewellten Abschnitts und die innere Oberfläche des genannten Endes mit Klebstoff und/oder Dichtmittel (20, 22) beschichtet sind.

12. Verfahren, um eine Abdichtung zwischen mindestens einem langgestreckten Objekt (6) und einer Oberfläche, die das oder jedes Objekt umgibt, zu bilden, wobei das Verfahren die folgenden Schritte aufweist: (a) Positionieren eines rohrförmigen oder Umwickelgegenstands (2), der verformt worden ist, um ihn wärmerückstellbar zu machen, und der elektrische Verbindungseinrichtungen (14) aufweist, zwischen dem Objekt und der Oberfläche und (b) Verbinden der elektrischen Verbindungseinrichtungen mit einer elektrischen Stromquelle (24), um zu bewirken, daß elektrischer Strom zwischen den Verbindungseinrichtungen fließt, um mindestens einen Teil des Gegenstands zu erwärmen und somit rückzustellen; wobei die Position der elektrischen Verbindungseinrichtungen und die Verformung des Gegenstands derart sind, daß eine Rückstellung mindestens einen Bereich des Gegenstands dazu veranlaßt, seine Wanddicke zu vergrößern und, mindestens im rückgestellten Zustand, eine gewellte Konfiguration anzunehmen, um den Zwischenraum zwischen dem langgestreckten Objekt und der umgebenden Oberfläche abzudichten.

## Revendications

1. Article tubulaire (2) doué de reprise de forme à chaud, qui a été déformé pour être rendu apte à une reprise de forme, comportant (a) une matière polymérique électriquement conductrice et (b) des moyens (14) de connexion électrique, la déformation de l'article et la position des moyens de connexion électrique étant telles que, lorsque les moyens de connexion électrique sont connectés électriquement à une source appropriée d'énergie électrique (24), le courant électrique circule à travers la matière polymérique conductrice dans au moins une zone de l'article, chauffant et provoquant une reprise de forme au moins de ladite zone de l'article de manière que, lors d'une reprise de forme, la paroi d'au moins un tronçon de ladite zone de l'article augmente d'épaisseur, et caractérisé en ce qu'une zone de l'article, au moins dans son état après reprise de forme, présente des sinuosités.

2. Article selon la revendication 1, dans lequel au moins une dimension transversale de l'article augmente lors d'une reprise de forme.

3. Article selon la revendication 2, dans lequel l'article est de section transversale sensiblement circulaire et augmente de diamètre lors d'une reprise de forme.

4. Article selon l'une quelconque des revendications précédentes, dans lequel au moins une partie de l'article présente des sinuosités dans son état avant reprise de forme, et la profondeur des sinuosités augmente lors d'une reprise de forme, produisant ainsi ladite augmentation d'épaisseur de paroi de l'article.

5. Article selon l'une quelconque des revendications précédentes, dans lequel au moins une surface de l'article est revêtue d'un adhésif ou d'une pâte d'étanchéité (20, 22).

6. Article selon la revendication 4, dans lequel au moins la zone à sinuosités est revêtue sur sa surface extérieure d'un adhésif ou d'une pâte d'étanchéité.

7. Article selon l'une quelconque des revendications précédentes, dans lequel des moyens annulaires (14) de connexion électrique sont placés à chaque extrémité du tronçon dont la paroi, lors d'une reprise de forme, augmente d'épaisseur.

8. Article selon l'une quelconque des revendications précédentes, dont au moins une partie peut être rétractée radialement, et qui comporte des seconds moyens (16, 18) de connexion électrique pouvant être connectés à une source d'énergie électrique (26).

9. Article selon la revendication 8, dans lequel au moins une extrémité de l'article se rétracte lors d'une reprise de forme et la partie restante de l'article augmente d'épaisseur lors d'une reprise de forme.

10. Article selon l'une quelconque des revendications précédentes, comportant un premier tronçon à sinuosités auquel des électrodes peuvent être reliées pour amener les sinuosités à augmenter de profondeur, et au moins un tronçon extrême thermorétractable comportant des électrodes longitudinales (16, 18) s'étendant sur la longueur de l'article, qui peuvent connectées à une source d'énergie électrique pour rétracter ladite ou lesdites extrémités.

11. Article selon la revendication 10, dans lequel la surface extérieure du tronçon à sinuosités et la surface intérieure de ladite extrémité sont revêtues d'un adhésif et/ou d'une pâte d'étanchéité (20, 22).

12. Procédé de formation d'une obturation étanche entre au moins un objet allongé (6) et une surface entourant le ou chaque objet, qui comprend : (a) la mise en place entre l'objet et la surface d'un article tubulaire ou enroulé (2) qui a été déformé pour être rendu apte à une reprise de forme à chaud, et qui comporte des moyens (14) de connexion électrique, et (b) la connexion des moyens de connexion électrique à une source d'énergie électrique (24) pour faire circuler un courant électrique entre les moyens de connexion afin de chauffer au moins une partie de l'article et d'en provoquer ainsi une reprise de forme ; la position des moyens de connexion électrique et la déformation de l'article étant telles qu'une reprise de forme amène au moins une zone de l'article à augmenter d'épaisseur de paroi et à adopter une configuration sinueuse, au moins dans l'état après reprise de forme, pour obturer de façon étanche l'espace entre l'objet allongé et la surface l'entourant.
